# EUROPÄISCHE PATENTANMELDUNG

(11) **EP 1 174 980 A1**
(43) Veröffentlichungstag der Anmeldung: **23.01.2002**
(21) Anmeldenummer: 00810641.1
(22) Anmeldetag: 19.07.2000
(51) Int. Cl.: H02K 1/20, H02K 3/24

(54) **Stator für eine elektrische Kraft- und/oder Arbeitsmaschine sowie Verwendung des Stators**

(71) Anmelder: ABB Industrie AG, 5400 Baden (CH)
(72) Erfinder: Jakoby, Ralf, Dr., 5224 Unterbözberg (CH); Popp, Oliver, Ph.D., 5442 Fislisbach (CH); von Wolfersdorf, Jens, Dr., 5417 Untersiggenthal (CH)
(74) Vertreter: ABB Patent Attorneys

(57) **Zusammenfassung**

Die vorliegende Erfindung offenbart einen Stator (1) für rotatorische elektrische Motoren oder Generatoren, welcher eine Vielzahl radialer Kühlkanäle (5) aufweist, die in Umfangsrichtung durch radiale Trennstege (4, 7) voneinander getrennt sind. Mindestens ein Teil dieser Trennstege (4, 7) wird ganz oder teilweise von den Statorwicklungsstäben (4) gebildet und ist an der dem Zentrum des Stators (1) entgegengesetzten Seite spitz auslaufend ausgebildet, so dass eine möglichst strömungsverlustfreie Zusammenführung jeweils zweier durch einen Wicklungsstab getrennter, radial vom Statorinneren nach aussen strömender Kühlmediumströmungen in einen gemeinsamen radialen Kühlmediumstrom erreicht wird. Hierdurch ergibt sich eine deutliche Verbesserung der Statorkühlung.

## Beschreibung

### Technisches Gebiet

Die vorliegende Erfindung betrifft einen Stator für eine elektrische Kraft- und/oder Arbeitsmaschine sowie die Verwendung des Stators gemäss den Oberbegriffen der unabhängigen Patentansprüche.

### Stand der Technik

Bei rotatorischen elektrischen Maschinen wie Elektromotoren und Generatoren ist es erforderlich, die durch elektrische Verluste im Rotor und Stator entstehende Wärme abzuführen, damit zulässige Bauteiltemperaturen und Toleranzen eingehalten werden können. Bei bestimmten Statorbauweisen ist es üblich, die erzeugte Wärme dadurch abzuführen, dass im Stator angeordnete und sich vom Rotor/Stator-Spalt radial nach aussen erstreckende Kühlkanäle von innen nach aussen von einem Kühlmedium, wie z.B. Luft, durchströmt werden und dabei Wärme von den Statorwicklungen und den Blechpacketen an das Kühlmedium abgegeben wird. Da viele dieser Maschinen nicht über separate Kühlmediumpumpen, wie z.B. separate Kühlluftgebläse, verfügen, sondern die Strömung in den Kühlkanälen durch Eigenventilation des Rotors erzeugt werden muss, sind die erzielbaren Kühlleistungen und damit die Leistungsfähigkeit bzw. Lebensdauer solcher Maschinen unbefriedigend.

### Darstellung der Erfindung

Es stellt sich daher die Aufgabe einen Stator für eine rotatorische elektrische Kraft- oder Arbeitsmaschine mit verbesserter Kühlungsfähigkeit zur Verfügung zu stellen.

Diese Aufgabe wird von dem Stator gemäss Anspruch 1 gelöst.

Demgemäss weist der Stator für eine rotatorische elektrische Kraftmaschine oder Arbeitsmaschine oder für eine Kombination aus beiden Maschinentypen eine in seinem Zentrum angeordnete und sich axial durch diesen hindurch erstreckende Öffnung auf, in welcher der Rotor der Maschine angeordnet wird und von welcher aus sich Kühlkanäle radial nach aussen hin erstrecken, welche in Umfangsrichtung durch mehrere radiale Trennstege voneinander getrennt sind. Mindestens ein Teil dieser Trennstege wird ausschliesslich oder teilweise von den Statorwicklungen, welche bevorzugterweise als axiale Statorwicklungsstäbe ausgebildet sind, gebildet, damit neben einer indirekten Wärmeübertragung von den Wicklungen über die Blechpackete auf das Kühlmedium auch eine direkte Wärmeübertragung von einer Teiloberfläche der Wicklungen bzw. Wicklungsstäbe auf das Kühlmedium möglich ist. Diese mindestens teilweise von den Statorwicklungen bzw. Statorwicklungsstäben gebildeten Trennstege werden im Folgenden auch als Wicklungstrennstege bezeichnet. An ihrer dem Statorzentrum entgegengesetzten Seite sind die Wicklungstrennstege im wesentlichen spitz, bevorzugterweise keilförmig, auslaufend ausgebildet, wodurch an radial fortgeschrittener Position eine möglichst strömungsverlustarme Zusammenführung jeweils zweier durch einen Wicklungstrennsteg getrennter, radial vom Statorinneren nach aussen strömender Kühlmediumströmungen in einen gemeinsamen radialen Kühlmediumstrom erreicht wird. Im wesentlichen spitz auslaufend bedeutet, dass die radial nach aussen zeigende Fläche klein ist gegenüber der Erstreckung des jeweiligen Wicklungstrennstegs in Umfangsrichtung. Insbesondere sind auch Konturen vorgesehen, welche ballig gewölbt nach aussen auslaufen bzw. gerundet sind. Es hat sich gezeigt, dass hierdurch die Kühlung des Stators gegenüber Statoren ähnlicher Bauweise deutlich verbessert werden kann, wodurch bei gleicher Maschinenleistung infolge abgesenkter Bauteiltemperaturen höhere Lebensdauern oder bei gleicher Lebensdauer grössere Maschinenleistungen erzielt werden können.

Die spitz bzw. keilförmig auslaufende Form der radial nach aussen zeigenden Enden der Wicklungstrennstege wird in einer bevorzugten Ausführungsform durch ein entsprechendes Ausformen der Wicklungskontur bzw. des Wicklungsstabquerschnitts erreicht, wobei es von Vorteil ist, wenn diese Trennstege einstückig von den Wicklungen oder Wicklungsstäben gebildet werden.

In einer anderen bevorzugten Ausführungsform wird diese Formgebung durch ein Anordnen von Formstücken an der dem Statorzentrum entgegengesetzten Seite der Wicklungen oder Wicklungsstäbe erreicht.

Der erfindungsgemässe Stator eignet sich besonders für die Verwendung in einem gasgekühlten Motor oder Generator oder in einer gasgekühlten Maschine, welche je nach Wunsch als Motor oder Generator betrieben werden kann. Das Kühlgas kann dabei in einem geschlossenen Kreislauf mit Wärmetauschern umlaufen (z.B. ein geschlossener Wasserstoffkreislauf) oder aus der Umgebung angesaugt und an die Umgebung abgegeben werden.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine Hälfte eines Elektromotors mit Rotor und Stator teilweise im Schnitt dargestellt;
Fig. 2 einen Schnitt durch den Stator entlang der Linie A-A in Fig. 1; und
Fig. 3 einen weiteren Stator im Schnitt wie in Fig. 2.

### Wege zur Ausführung der Erfindung

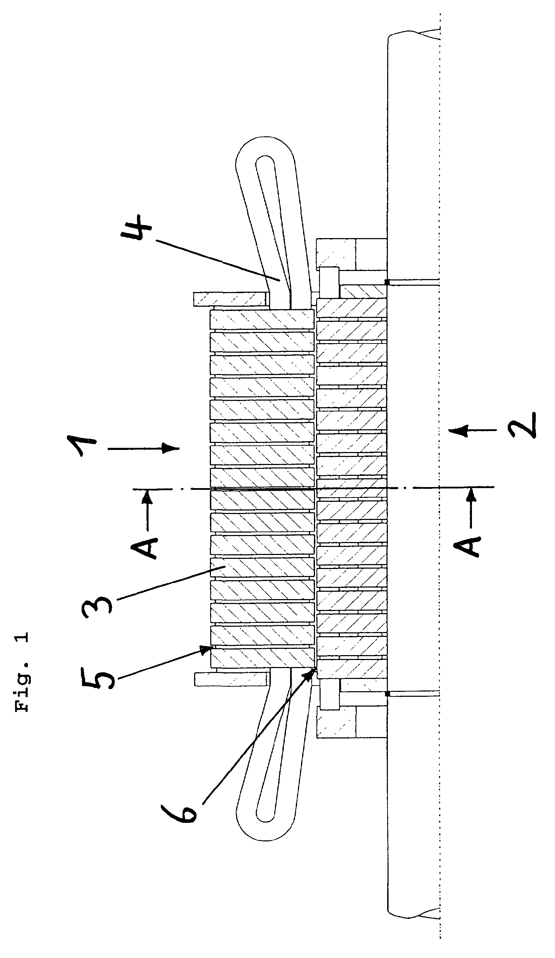

Eine bevorzugte Ausführung der Erfindung ist in Fig. 1 dargestellt. Die Zeichnung zeigt eine Hälfte eines luftgekühlten Elektromotors mit Stator 1 und einem im Zentrum des Stators 1 angeordneten und sich durch diesen hindurch erstreckenden Rotor 2, teilweise im Schnitt. Wie zu erkennen ist, umfasst der Stator 1 die Statorblechpackete 3 und die Statorwicklungsstäbe 4 (nur ein Stab dargestellt) und axial zwischen den Blechpacketen 3 angeordnete Kühlkanäle 5, welche sich vom Rotor/Stator-Spalt 6 aus radial durch den Stator 1 nach aussen hin erstrecken. Der Rotor 2 liefert einen Kühlluftstrom, der zuerst in den Rotor/Stator-Spalt 6 und sodann in die Kühlkanäle 5 des Stators 1 eintritt und den Stator 1 dadurch kühlt.

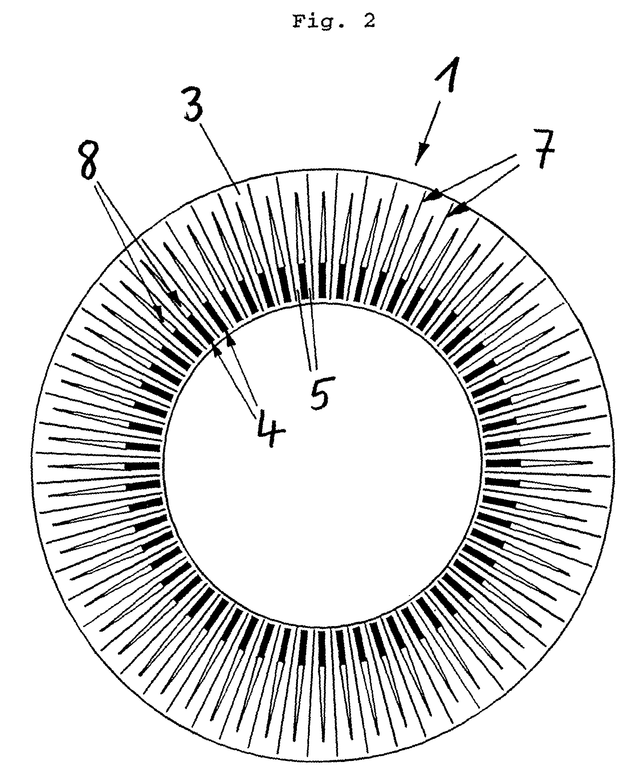

Wie in Verbindung mit Fig. 2, welche einen Schnitt durch den Stator 1 entlang der Linie A-A in Fig. 1 zeigt, wobei der Stator 1 hier vollständig aber ohne Rotor 2 dargestellt ist, zu erkennen ist, treten die Statorwicklungsstäbe 4 axial durch die Kühlkanäle 5 hindurch und bilden dabei mit ihren zwischen den Blechpacketen 3 angeordneten Erstreckungen radiale Trennstege aus, welche in Umfangsrichtung gesehen jeweils zwei radiale Kühlkanäle 5 voneinander trennen. An den dem Statorzentrum entgegengesetzten Seiten der Wicklungsstäbe 4, oder anders ausgedrückt an den in radialer Richtung nach aussen zeigenden Enden ihrer Erstreckungen, sind bevorzugterweise keilförmige Formstücke 8 angeordnet, derart, dass die Statorwicklungsstäbe 4 und die Formstücke 8 gemeinsame Körper ausbilden, die eine allmähliche Zusammenführung jeweils zweier durch einen Wicklungsstab 4 getrennter, radial vom Statorinneren nach aussen strömender Kühlluftströmungen in einen radialen Kühlluftstrom bewirken. Hierdurch werden die Strömungsverluste verringert und die Kühlung des Stators 1 verbessert.

Wie weiter zu erkennen ist, weist der dargestellte Stator 1 ausserdem radiale Trennstege 7 in Umfangsrichtung zwischen den Kühlkanälen 5 auf, welche keinen Statorwicklungsstab 4 umfassen und gleichzeitig als axiale Stützstege zwischen den Blechpacketen 3 dienen. Diese wicklungslosen Trennstege 7 wechseln sich in Umfangsrichtung gesehen jeweils mit den von den Wicklungsstäben 4 und den Formstücken 8 gebildeten Wicklungstrennstegen ab. Im dargestellten Ausführungsbeispiel weisen sie eine grössere radiale Erstreckung auf als die Letztgenannten und erstrecken sich zudem in radialer Richtung deutlich weiter nach aussen als die Wicklungstrennstege. Auch wenn in der Darstellung alle wicklungslosen Trennstege 7 identische radiale Erstreckungen aufweisen, so sind ebenso Anwendungen denkbar, bei denen diese unterschiedliche radiale Erstreckungen aufweisen.

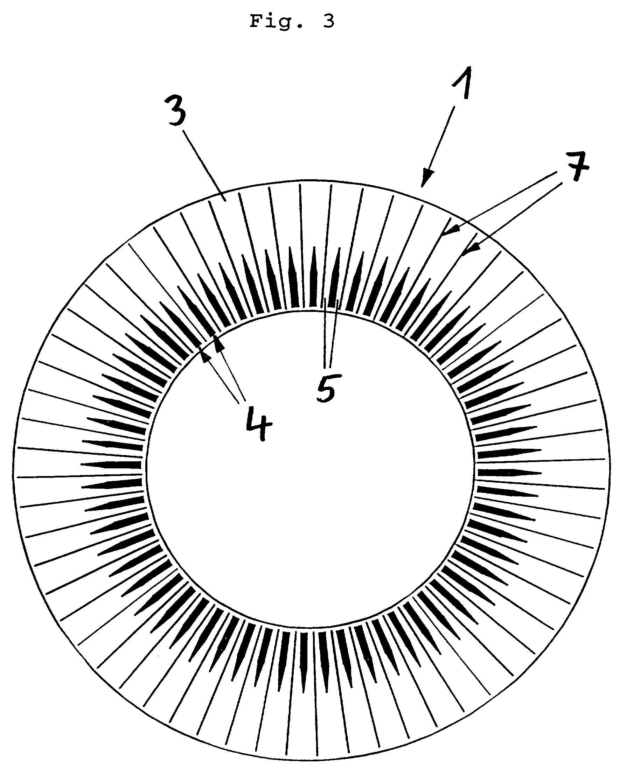

Fig. 3 zeigt einen Stator 1 praktisch identischer Bauart wie der Stator 1 in Fig. 2, jedoch mit dem Unterschied, dass hier die Statorwicklungsstäbe 4 auf ihrer dem Statorzentrum entgegengesetzten Seite spitz auslaufend ausgebildet sind und die mindestens teilweise von den Wicklungsstäben 4 gebildeten Wicklungstrennstege 4 hier einstückig von den Wicklungsstäben 4 gebildet werden.

### Bezugszeichenliste

- 1: Stator
- 2: Rotor
- 3: Statorblechpacket
- 4: Statorwicklungsstab
- 5: radialer Kühlluftkanal
- 6: Rotor/Stator-Spalt
- 7: wicklungsloser Trennsteg (Stützsteg)
- 8: Formstück

## Patentansprüche

1. Stator für eine rotatorische elektrische Kraft- und/oder Arbeitsmaschine mit einer Achse, mit einer sich in axialer Richtung durch den Stator (1) hindurch erstreckenden zentralen Öffnung zur Aufnahme eines Rotors und mit Kühlkanälen (5), welche sich radial von der zentralen Öffnung nach aussen hin erstrecken und in Umfangsrichtung durch radiale Trennstege (4, 7) voneinander getrennt sind, wobei mindestens ein Teil dieser Trennstege (4, 7) Wicklungstrennstege (4) sind, welche mindestens teilweise von den Statorwicklungen (4) gebildet werden zur Kühlung derselben, **dadurch gekennzeichnet, dass** ein Teil oder alle der Wicklungstrennstege (4) an ihrer dem Statorzentrum entgegengesetzten Seite im wesentlichen spitz auslaufend ausgebildet sind.

2. Stator nach Anspruch 1, **dadurch gekennzeichnet, dass** die Statorwicklungen (4) an ihrer dem Statorzentrum entgegengesetzten Seite eine im wesentlichen spitz, insbesondere keilförmig, auslaufende Kontur aufweisen und insbesondere, dass mindestens ein Teil oder alle der Wicklungstrennstege (4) einstückig von den Statorwicklungen (4) gebildet werden.

3. Stator nach einem der vorangehenden Ansprüche, **dadurch gekennzeichnet, dass** mindestens ein Teil oder alle der Wicklungstrennstege (4) separat ausgebildete und spitz, insbesondere keilförmig, auslaufende Formstücke (8) umfassen, und insbesondere, dass diese Formstücke (8) an der dem Statorzentrum entgegengesetzten Seite der Statorwicklungen (4) angeordnet sind.

4. Stator nach einem der vorangehenden Ansprüche, **dadurch gekennzeichnet, dass** sich auf einer radialen Position im Bereich der radialen Erstreckung der Statorwicklungen (4) in Umfangsrichtung gesehen jeweils Wicklungstrennstege (4) und wicklungslose Trennstege (7), welche keine Statorwicklung (4) umfassen, abwechseln.

5. Stator nach Anspruch 4, **dadurch gekennzeichnet, dass** mindestens ein Teil oder alle der wicklungslosen Trennstege (7) eine grössere radiale Erstreckung aufweisen als die Wicklungstrennstege (4), und insbesondere, dass sich mindestens ein Teil oder alle der wicklungslosen Trennstege (7) radial weiter nach aussen hin erstrecken als die Wicklungstrennstege (4).

6. Verwendung des Stators nach einem der vorangehenden Ansprüche in einem gasgekühlten, insbesondere luftgekühlten, Generator und/oder Motor.
